Europäisches Patentamt

European Patent Office

Office européen des brevets

(19)

(11) Numéro de publication : **0 190 950**
**B1**

(12) **FASCICULE DE BREVET EUROPÉEN**

(45) Date de publication du fascicule du brevet :
25.05.88

(21) Numéro de dépôt : **86400014.6**

(22) Date de dépôt : **06.01.86**

(51) Int. Cl.⁴ : **B 65 G 35/06**

(54) Convoyeur à chaines permettant d'accumuler des chariots sur un tronçon du convoyeur.

(30) Priorité : **14.01.85 FR 8500435**

(43) Date de publication de la demande :
**13.08.86 Bulletin 86/33**

(45) Mention de la délivrance du brevet :
**25.05.88 Bulletin 88/21**

(84) Etats contractants désignés :
**BE CH DE GB IT LI SE**

(56) Documents cités :
**DE-A- 2 622 714
DE-A- 3 029 620
DE-A- 3 124 898
FR-A- 2 489 274**

(73) Titulaire : **AUTOMOBILES PEUGEOT
75, avenue de la Grande Armée
F-75116 Paris (FR)**

**AUTOMOBILES CITROEN
62 Boulevard Victor-Hugo
F-92200 Neuilly-sur-Seine (FR)**

(72) Inventeur : **Grosrenaud, Jean-Jacques
45 rue Sous-La-Chaux
F-25600 Sochaux (FR)**
Inventeur : **Mosser, Maurice
14 rue J.B. Lamarck
F-25200 Montbeliard (FR)**

(74) Mandataire : **Polus, Camille et al
c/o Cabinet Lavoix 2, Place d'Estienne d'Orves
F-75441 Paris Cedex 09 (FR)**

## Description

L'invention a pour objet un convoyeur à chaînes et elle est plus particulièrement destinée à un convoyeur permettant de réaliser l'accumulation d'un certain nombre de chariots sur un tronçon du convoyeur, selon le déroulement des opérations de déchargement.

Il est connu (DE-A-3 124 898) d'utiliser des convoyeurs à chaînes pour assurer le déplacement, sur une certaine distance horizontale, de chariots supportant une charge, le retour à vide au point de départ s'effectuant en dessous du trajet aller. Il faut alors adjoindre au convoyeur proprement dit des moyens d'abaissement des chariots à une extrémité et d'élévation des chariots à l'autre extrémité, ce qui nécessite des mécanismes d'entraînement distincts assortis de moyens d'asservissement importants qui influent sur le prix de revient et la fiabilité.

Le DE-A-2 622 714 décrit ainsi un convoyeur à chaînes comportant des chariots munis d'essieux reliés à des pignons par des accouplements à friction.

Il s'ensuit que, du fait de la présence des accouplements à friction, l'entraînement des chariots n'est pas positif pour la descente et la remontée. Par conséquent, le tarage des accouplements à friction doit être tel que les chariots ne soient pas entraînés par leur poids dans la descente et puissent effectivement être relevés dans la montée. Ceci présente un très grave inconvénient pour assurer facilement l'arrêt d'un chariot devant un obstacle.

L'invention a pour but de simplifier considérablement ces mécanismes en réalisant un dispositif qui effectue, à la fois, les transferts horizontaux ainsi que les montées et descentes des chariots à partir d'un moyen d'entraînement unique.

Le convoyeur à chaînes visé par l'invention comporte un châssis supportant deux chaînes sans fin parallèles d'entraînement de chariots, ces chaînes engrenant chacune avec une roue dentée motrice et une roue dentée de renvoi disposées dans un plan vertical, et étant agencées de telle sorte que le retour s'effectue en dessous du trajet aller.

Suivant l'invention, chaque chariot comporte au moins un essieu sur lequel sont montés, par l'intermédiaire d'un dispositif d'accouplement par friction, deux pignons engrenant chacun avec l'une des deux chaînes, ces pignons étant en outre destinés à engrener avec des crémaillères courbes montées au moins sensiblement sur un demi-cercle autour desdites roues dentées.

Suivant un mode de réalisation préféré, les crémaillères courbes sont constituées par des chaînes fixes de même module que les chaînes d'entraînement.

De préférence également, les chaînes d'entraînement sont doubles, une rangée de maillons coopérant avec les pignons des chariots, l'autre rangée de maillons coopérant avec les roues dentées.

Suivant une autre caractéristique, le poids des chariots est supporté par des galets montés fous sur les essieux et roulant sur des chemins de roulement parallèles aux brins horizontaux des chaînes.

D'autres particularités et avantages de l'invention apparaîtront au cours de la description qui suit, faite en référence aux dessins joints qui en illustrent un mode de réalisation à titre d'exemple non limitatif.

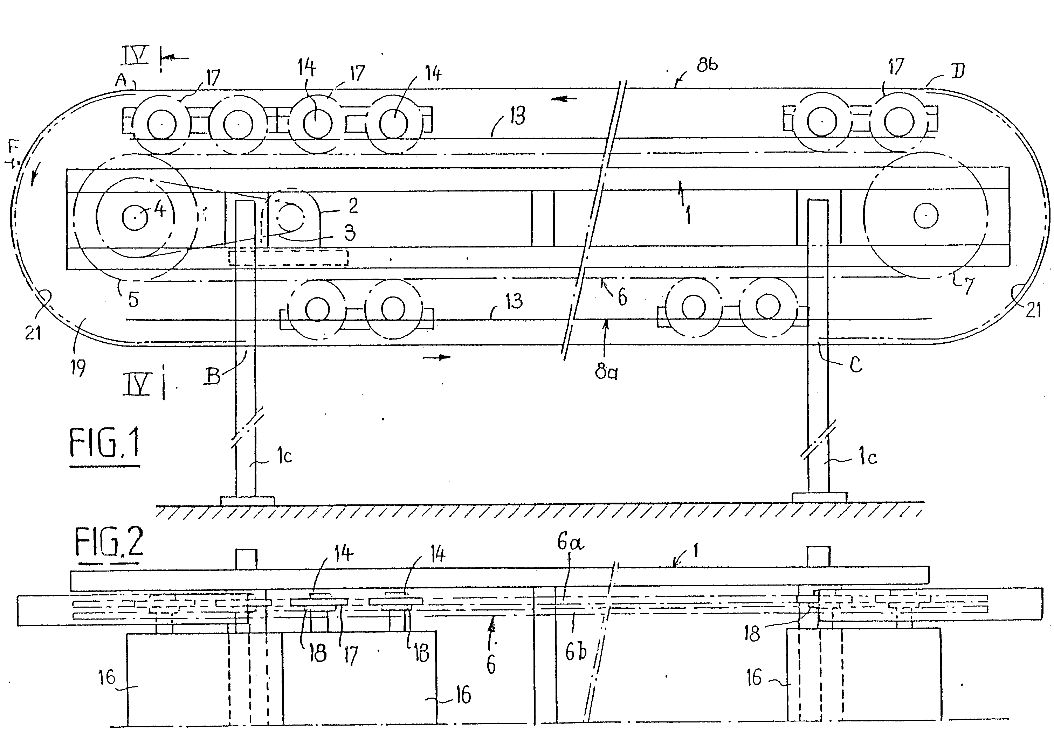

- La Fig. 1 est une vue en élévation latérale d'un mode de réalisation du convoyeur selon l'invention

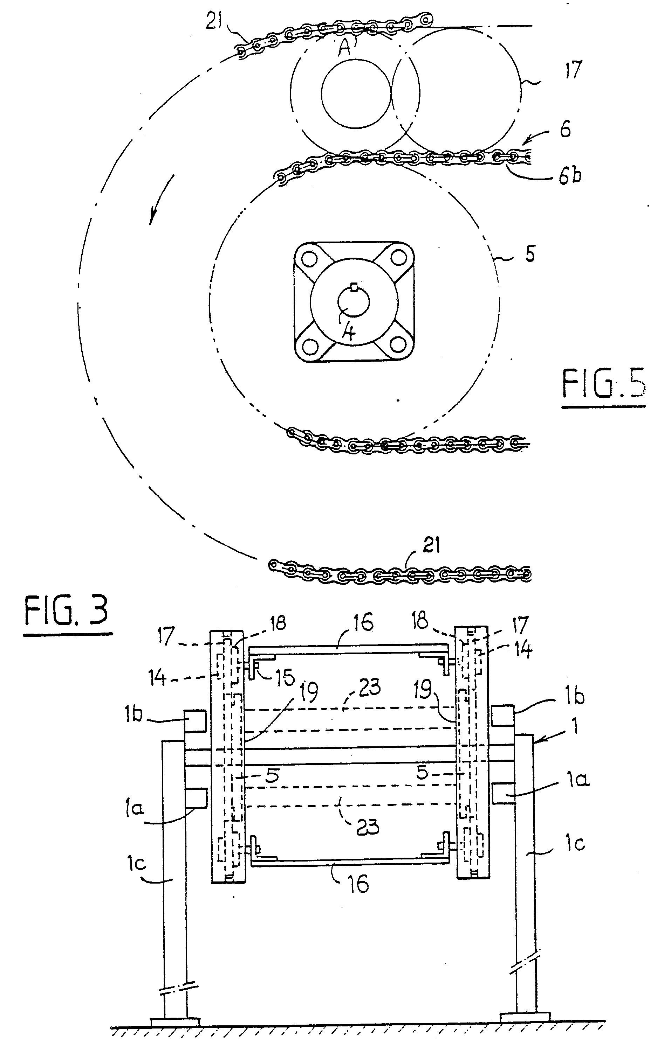

- La Fig. 2 est une vue partielle de dessus du convoyeur de la Fig. 1
- La Fig. 3 est une vue en bout du convoyeur suivant la flèche F de la Fig. 1

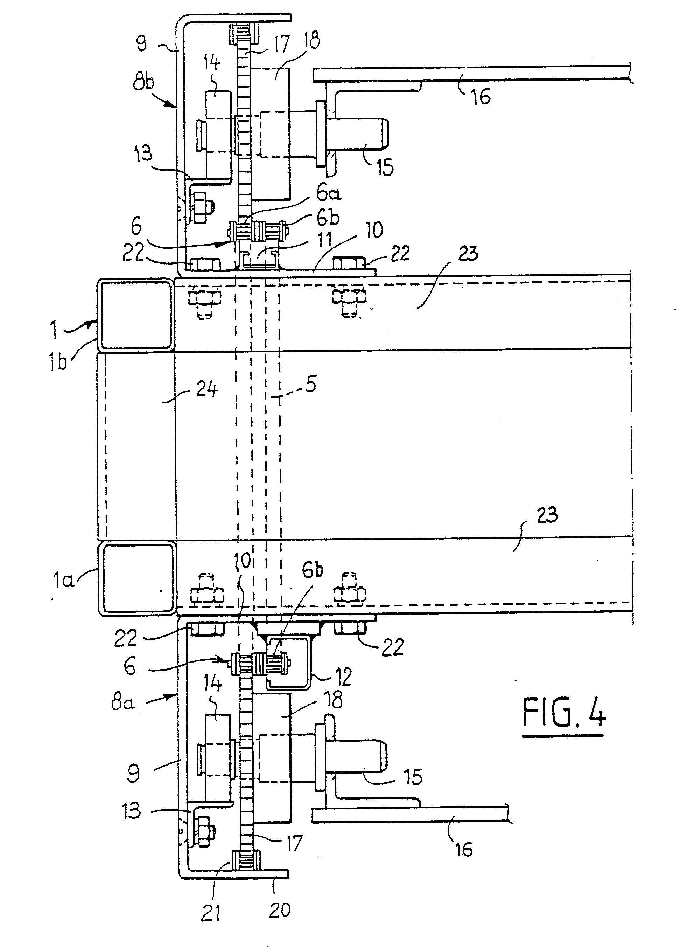

- La Fig. 4 est une vue en coupe transversale à plus grande échelle, suivant la ligne IV-IV de la Fig. 1
- La Fig. 5 est une vue en élévation latérale de l'une des extrémités du convoyeur.

Le convoyeur représenté aux dessins comporte un châssis 1 muni de pieds 1c d'appui sur le sol. Un moteur 2 assure, au moyen d'une transmission 3, l'entraînement en rotation d'un arbre transversal 4 sur lequel sont clavetées deux roues dentées motrices 5 situées à une extrémité du châssis 1. Sur chacune de ces roues 5 engrène une chaîne double 6, constituée de deux rangées (6a, 6b) de maillons, qui engrène, à l'autre extrémité du châssis 1, sur une roue dentée de renvoi 7. L'engrènement se fait par la rangée 6b de maillons située vers l'intérieur du châssis 1, lequel est formé de poutres longitudinales (1a, 1b) reliées par des traverses 23 et des montants verticaux 24.

Au-dessus et au-dessous du châssis 1, sont disposés deux longerons 8a, 8b comportant chacun un flasque vertical 9 et une branche horizontale 10 fixée aux traverses 23 par des boulons 22. Sur la branche horizontale 10 du longeron supérieur 8b est fixée une glissière 11 sur laquelle glisse le brin supérieur de la chaîne 6 correspondante. Sur la branche horizontale 10 du longeron inférieur 8a est fixée une glissière 12 dans laquelle coulisse la rangée 6b de maillons de la chaîne 6 qui engrène avec les roues dentées 5 et 7.

Sur les flasques 9 sont fixées des cornières 13 qui constituent des chemins de roulement pour des galets 14 montés fous sur des essieux 15 de chariots 16 destinés à déplacer des charges et disposés entre les flasques 9.

Sur l'un, au moins, des essieux 15 de chaque chariot 16 sont montés deux pignons 17 qui engrènent en permanence avec la rangée 6a de maillons de la chaîne 6 située vers l'extérieur. Chaque pignon 17 est relié à l'essieu 15 par un dispositif d'entraînement assurant un accouplement par friction 18, connu en soi qui assure la libération des pignons 17 par rapport à l'essieu 15 à partir d'un certain couple.

A chaque extrémité du châssis 1, les longerons supérieur 8b et inférieur 8a sont reliés entre eux par une ferrure en U 19 cintrée suivant une demi-circonférence. La branche extérieure 20 du U porte, sur sa face intérieure, une chaîne fixe 21 de même module que les chaînes 6 et constituant une crémaillère courbe sur laquelle engrènent les pignons 17 portés par les essieux 15.

Chaque chaîne fixe 21 se développe au moins sensiblement sur une demi-circonférence, mais peut éventuellement être prolongée par une partie rectiligne. C'est ainsi que, dans l'exemple représenté, la chaîne 21 située côté roue motrice 5, et correspondant à la descente des chariots, va du point A au point B qui termine une partie rectiligne inférieure horizontale, alors que la chaîne 21 située côté opposé, correspondant à la remontée des chariots, va du point C au point D, qui termine la partie cintrée au niveau des longerons supérieurs b.

Le fonctionnement du convoyeur tel que décrit est le suivant :

Dans les parties horizontales non associées à un tronçon de chaîne fixe 21, c'est-à-dire de D en A pour la partie supérieure et de B en C pour la partie inférieure, les pignons 17 restent solidaires de leur essieu 15 tant qu'aucun obstacle ne s'oppose à la progression des chariots 16. Ces derniers sont donc entraînés par la chaîne 6 mue par la roue 5 et le moteur 2, à la vitesse de la chaîne 6. Lorsqu'un chariot 16 heurte le chariot précédent ou une butée mobile (non représentée), un couple apparaît entre pignons 17 et essieu 15, entraînant le débrayage des uns par rapport à l'autre, donc l'arrêt du chariot 16 associé, alors que les chaînes 6 continuent à tourner. On peut ainsi accumuler à volonté les chariots 16 pleins avant le poste de déchargement et les chariots vides avant la remontée au poste de chargement. Dès que l'obstacle a disparu, le chariot repart.

Les butées mobiles et leurs moyens de manœuvre sont bien connus en soi et donc non décrits ici, car ils ne font pas partie de l'invention.

Lorsque les dents des pignons 17 d'un chariot 16 commencent à venir en prise, en A, avec les chaînes fixes 21, un couple apparaît entre pignons 17 et essieu 15, entraînant le débrayage des uns par rapport à l'autre. Il se produit alors un mouvement épicycloïdal des pignons 17 réalisant un entraînement positif des chariots 16 avec retournement. Ce mode de progression se poursuit jusqu'à ce que les pignons 17 se dégagent des chaînes 21, en B.

Une opération similaire se produit à l'autre extrémité du convoyeur entre les points C et D, réalisant la remontée et le retournement des chariots 16 qui sont à nouveau prêts à recevoir une charge.

On voit que le dispositif décrit permet bien de réaliser de façon très simple l'ensemble des mouvements de transferts horizontaux, de montée et de descente, avec un seul moteur d'entraînement tournant en continu.

**Revendications**

1. Convoyeur à chaînes, comportant un châssis (1) supportant deux chaînes sans fin (6) parallèles d'entraînement de chariots (16), ces chaînes (6) engrenant chacune avec une roue dentée motrice (5) et une roue dentée de renvoi (7) disposées dans un plan vertical, étant agencées de telle sorte que le retour à vide des chariots (16) après déchargement s'effectue en dessous du trajet aller, chaque chariot (16) comportant au moins un essieu (15) sur lequel sont montés, par l'intermédiaire d'un dispositif d'accouplement par friction (18), deux pignons (17) engrenant chacun avec l'une des deux chaînes (6) caractérisé en ce que ces pignons (17) sont destinés à engrener avec des crémaillères courbes (21) montées au moins sensiblement sur un demi-cercle autour desdites roues dentées (5, 7).

2. Convoyeur selon la revendication 1, caractérisé en ce que les crémaillères courbes (21) sont constituées par des chaînes fixes de même module que les chaînes (6) d'entraînement.

3. Convoyeur selon l'une des revendications 1 et 2, caractérisé en ce que les chaînes d'entraînement sont doubles et comprennent donc chacune deux rangées de maillons, dont l'une (6a), coopère avec les pignons (17) des chariots (16) tandis que l'autre rangée coopère avec les roues dentées (5, 7).

4. Convoyeur selon l'une des revendications 1 à 3, caractérisé en ce que les chariots (16) sont supportés par des galets (14) montés fous sur les essieux (15) et roulant sur des chemins de roulement (13) parallèles aux brins horizontaux des chaînes (6) d'entraînement.

**Claims**

1. A chain conveyor comprising a frame (1) supporting two endless parallel chains (6) driving trucks (16), these chains (6) each engaging with a driving sprocket wheel (5) and a return sprocket wheel (7) disposed in a vertical plane and being arranged in such a way that the return of the empty trucks (18) after unloading is effected below the forward path, each truck (18) comprising at least one axle (15) whereon there are mounted by means of a friction coupling device (18), two pinions (17) each engaging with one of the two chains (6), characterised in that these pinions (17) are intended to engage with curved racks (21) mounted, at least substantially, over a semi-circle around the said sprocket wheels (5, 7).

2. A conveyor according to Claim 1, characterised in that the curved racks (21) are constituted by fixed chains with the same pitch as the driving chains (6).

3. A conveyor according to one of Claims 1 and 2, characterised in that the driving chains are double and therefore each comprise two rows of links whereof one (6a) cooperates with the pinion (17) of the truck (16) whilst the other row cooperates with the sprocket wheels (5, 7).

4. A conveyor according to one of Claims 1 to 3, characterised in that the trucks (16) are supported by rollers (14) freely rotatably mounted on the axles (15) and rolling along runways (13) parallel to the horizontal strands of the driving chains (6).

**Patentansprüche**

1. Kettenförderer, mit einem zwei parallele Endlosketten (6) halternde Chassis (1) zum Antrieb von Schlitten (16), wobei die Ketten (6) jeweils in ein Antriebszahnrad (5) und ein Getriebezahnrad (7) eingreifen, welche in einer senkrechten Ebene so angeordnet sind, daß die Leerrückfahrt der Schlitten (16) nach der Entladung unterhalb des Hinlaufs erfolgt, wobei jeder Schlitten (16) mindestens eine Achse (15) aufweist, auf welcher mittels einer Reibungskupplung (18) zwei in jeweils eine der beiden Ketten (6) eingreifende Ritzel (17) angeordnet sind, dadurch gekennzeichnet, daß die Ritzel (17) im Eingriff mit gebogenen, mindestens halbkreisförmig um die Zahnräder (5, 7) angeordneten Zahnstangen (21) sind.

2. Förderer nach Anspruch 1, dadurch gekennzeichnet, daß die gebogenen Zahnstangen (21) aus feststehenden Ketten desselben Moduls bestehen wie die Antriebsketten (6).

3. Förderer nach einem der Ansprüche 1 und 2, dadurch gekennzeichnet, daß die Antriebsketten zweiteilig ausgebildet sind und zwei Reihen von Kettengliedern aufweisen, von welchen die eine (6a) mit Ritzeln (17) des Schlittens (16) und die andere (6b) mit den Zahnrädern (5, 7) zusammenwirkt.

4. Förderer nach einem der Ansprüche 1 bis 3, dadurch gekennzeichnet, daß die Schlitten (16) von auf den Achsen (15) beweglich gelagerten Rollen (14) gehalten sind und auf parallel zu dem horizontalen Trum der Antriebsketten (6) verlaufenden Rollbahnen (13) abrollen.

FIG.1

FIG.2

0 190 950

FIG.5

FIG.3

FIG. 4